# EUROPÄISCHE PATENTSCHRIFT

(11) **EP 3 071 821 B1**
(45) Veröffentlichungstag und Bekanntmachung des Hinweises auf die Patenterteilung: **05.01.2022**
(21) Anmeldenummer: 14799411.5
(22) Anmeldetag: 14.11.2014
(51) Int. Cl.: F02D 41/14, G01N 27/406, G01N 27/417

(54) **VERFAHREN ZUM BETRIEB EINER SENSORAUSWERTEEINHEIT UND SENSORAUSWERTEEINHEIT**
METHOD FOR OPERATING A SENSOR EVALUATION UNIT AND SENSOR EVALUATION UNIT
PROCÉDÉ PERMETTANT DE FAIRE FONCTIONNER UNE UNITÉ D'ÉVALUATION D'UN CAPTEUR ET UNITÉ D'ÉVALUATION D'UN CAPTEUR

(30) Priorität: 20.11.2013 DE 102013223731
(43) Veröffentlichungstag der Anmeldung: 28.09.2016
(73) Patentinhaber: Robert Bosch GmbH, 70442 Stuttgart (DE)
(72) Erfinder: LEDERMANN, Bernhard, 70499 Stuttgart (DE); BAUMANN, Fabian, 68163 Mannheim (DE); BEVOT, Claudius, 70197 Stuttgart (DE); MITTASCH, Anne-Katrin, 72760 Reutlingen (DE)
(86) Internationale Anmeldenummer: PCT/EP2014/074591
(87) Internationale Veröffentlichungsnummer: WO 2015/074962

(56) Entgegenhaltungen:
- DE-A1-102006 058 310
- DE-A1-102008 001 697
- DE-A1-102009 027 378
- DE-A1-102010 029 776
- DE-A1-102011 004 073

## Beschreibung

Die Erfindung betrifft ein Verfahren zum Betrieb einer Sensorauswerteeinheit und eine Sensorauswerteeinheit gemäß den Oberbegriffen der jeweiligen unabhängigen Ansprüche. Des Weiteren betrifft die Erfindung ein Computerprogramm, das alle Schritte des erfindungsgemäßen Verfahrens ausführt, wenn es auf einem Rechengerät oder einer Steuereinrichtung abläuft, sowie ein Computerprogrammprodukt mit Programmcode, der auf einem maschinenlesbaren Träger gespeichert ist, zur Durchführung des erfindungsgemäßen Verfahrens, wenn das Programm auf einem Rechengerät oder einer Steuereinrichtung ausgeführt wird.

### Stand der Technik

Bei Sensoren zur Erfassung von Gasbestandteilen in einem Messgas, insbesondere von in der Fahrzeugtechnik eingesetzten Lambdasonden, gibt es herstellungsbedingte Fertigungstoleranzen bzw. -schwankungen. Im Falle einer Breitband-Lambdasonde betreffen diese Fertigungstoleranzen insbesondere die Durchlässigkeit der Diffusionsbarriere. Das zu messende Abgas einer Brennkraftmaschine diffundiert dabei in an sich bekannter Weise über die Diffusionsbarriere in eine Pumpzelle, wobei abhängig von der Durchlässigkeit mehr oder weniger Abgas in die Pumpzelle eindiffundiert. Die entsprechenden Abweichungen von einer nominalen Durchlässigkeit und daraus resultierenden Diffusionsschwankungen ergeben eine nicht hinnehmbare Ungenauigkeit bei der Lambda-Auswertung.

Es ist daher bekannt, bereits bei der Herstellung von Lambdasonden die Durchlässigkeit der Diffusionsbarriere zu messen und abhängig von dem Messergebnis entweder die Diffusionsbarriere mittels eines Laser-Abgleichs zu normieren oder die Lambdasonde mittels eines z.B. im Sondenstecker angeordneten elektrischen Abgleich- bzw. Trimmwiderstandes zu adaptieren. Durch beide Verfahren wird eine ausreichend genaue Zuordnung des an der Pumpzelle gemessenen Pumpstroms mit dem Restsauerstoffgehalt im Abgas ermöglicht.

Im Falle einer genannten Adaption mittels eines Trimmwiderstandes wird in aktuellen, mit einem Auswerte-IC wie dem von der Anmelderin vertriebenen Sensorauswerte-ASIC mit der Bezeichnung "CJ135" ausgestatteten Steuergeräten der Widerstandswert des Trimmwiderstandes vor der Lambda-Auswertung so genau wie möglich ausgemessen. Aufgrund der Vielfalt der verfügbaren Sonden variieren auch die Widerstandswerte der Trimmwiderstände erheblich und ergeben zudem relativ hohe Werte von zum Beispiel 4 kOhm. Bei diesen großen Widerstandswerten fällt über den Trimmwiderstand eine Spannung ab, welche den möglichen Messbereich der bekannten Steuergeräte bzw. Auswerte-ASICs deutlich übersteigt. Daher wird bei der Ausmessung eines Trimmwiderstandes ein Messwiderstand zwischen entsprechende Sensorleitungen geschaltet, welcher aufgrund der Widerstands-Parallelschaltung in an sich bekannter Weise den Messbereich der Widerstandsmessung auf relativ große Trimmwiderstände erweitert.

Die beiden Dokumente DE102011004073 und DE102008001697 zeigen solche Auswerteschaltkreise bei denen ein Messwiderstand zur Bestimmung des Trimmwiderstandes verwendet wird.

### Offenbarung der Erfindung

Der Erfindung liegt der Gedanke zugrunde, eine hier betroffene Sensorauswerteeinheit bevorzugt in ihrer Ablaufsteuerung so zu modifizieren, dass trotz der genannten Fertigungstoleranzen der auszuwertenden Sensoren, und mit möglichst geringem technischem Aufwand und entsprechend geringem Kostenaufwand, Sensormessungen mit hoher Messgenauigkeit ermöglicht werden. Insbesondere aus Kostengründen soll dabei ein eingangs genannter Messwiderstand eingespart werden.

Die Erfindung schlägt insbesondere vor, den Spannungsabfall an einem hier betroffenen Abgleich- bzw. Trimmwiderstand durch Verringerung des Messstroms so zu reduzieren, dass der Wert des Trimmwiderstandes auch ohne einen genannten Messwiderstand mit hoher Genauigkeit gemessen werden kann.

Gemäß einer ersten Variante wird der Stellbereich einer Messstromquelle zur Bereitstellung eines Messstroms für den jeweils auszuwertenden Sensor, im Falle einer Lambdasonde der Stellbereich einer eingangs genannten Pumpstromquelle, zu kleineren Stromwerten hin erweitert, und zwar bevorzugt zu Werten von 0,4 mA bis 18 mA, wobei der jeweilige Stromwert möglichst präzise einstellbar ist. Durch diese Erweiterung der möglichen Stromwerte insbesondere zu kleinen Werten hin können relativ hohe Widerstandswerte des Trimmwiderstandes durch Anwenden eines relativ geringen Messstroms kompensiert werden und dadurch die eingangs genannten hohen Spannungsabfälle am Trimmwiderstand wirksam verhindert werden.

Gemäß einer zweiten Variante wird zusätzlich zu der Messstromquelle bzw. Pumpstromquelle eine bei im Stand der Technik bekannten Auswerteeinheiten meist verfügbare zweite Stromquelle zur Erzeugung eines geringeren Stroms zur Widerstandsmessung verwendet. Hierzu muss diese zweite Stromquelle an die zu messenden Leitungen angeschaltet werden. Im Falle eines eingangs genannten ASICs des Typs CJ135 ist dies durch entsprechende Anpassung der Ablaufsteuerung des ICs möglich. So liefert die dort bereits vorhandene Referenzstromquelle mit der Bezeichnung SQr bereits einen präzisen Strom zwischen 0,4 mA und 1,1 mA. Durch abwechselnden oder sogar gleichzeitigen Betrieb der Messstromquelle und der zweiten Stromquelle kann daher bereits der erfindungsgemäß vorgeschlagene Stromwertebereich abgedeckt werden und insbesondere ein genannter relativ geringer Messstrom zur Verfügung gestellt werden.

Die Erfindung ermöglicht die Einsparung eines genannten Messwiderstandes in einer Auswerteschaltung für messtrombasierte Sensoren, insbesondere für Lambdasonden, ohne die Messergebnisse eines hier betroffenen Abgleich- bzw. Trimmwiderstandes negativ zu beeinflussen.

Zusätzlich ermöglicht die Erfindung eine vereinfachte bzw. verbesserte Diagnose von z.B. durch Leitungstrennung oder Leitungsbruch verursachten Leitungsverbindungsproblemen zwischen Sensor und Auswerteeinheit, da im Gegensatz zum Stand der Technik insbesondere nicht mehr mehrere Messungen durchgeführt werden müssen.

Zusätzlich zur genannten Kostenreduktion ermöglicht die Erfindung eine erhöhte Messgenauigkeit, da Bauteilschwankungen des Messwiderstandes in der Toleranzrechnung entfallen. Durch den Verzicht auf den Messwiderstand wird das Design der Auswerteeinheit bzw. des ASICs robuster und ist bei allen von der Auswerteeinheit unterstützten Sensoren bzw. Sonden mit den bereits genannten Vorteilen anwendbar. Dies gilt auch für Sensoren, die ohne einen genannten Trimmwiderstand auskommen.

Weitere Vorteile und Ausgestaltungen der Erfindung ergeben sich aus der Beschreibung und den beiliegenden Zeichnungen.

Die Erfindung kann insbesondere in einem Steuergerät für eine Breitband-Lambdasonde zur Anwendung kommen, wobei die erfindungsgemäß modifizierte Sensorauswerteinheit auch in einem ASIC realisiert werden kann. Darüber hinaus ist die Erfindung aber auch bei der Auswertung bzw. beim Betrieb anderer Sensoren bzw. Sonden anwendbar, sofern die Sensoren in der hierin beschriebenen Weise abgeglichen werden.

Es versteht sich, dass die voranstehend genannten und die nachstehend noch zu erläuternden Merkmale nicht nur in der jeweiligen angegebenen Kombination, sondern auch in anderen Kombinationen oder in Alleinstellung verwendbar sind, ohne den Rahmen der vorliegenden Erfindung zu verlassen. Der Schutzumfang der vorliegenden Erfindung ist alleine durch die beigefügten Ansprüche festgelegt.

Kurze Beschreibung der Zeichnungen
- Figur 1: zeigt ein vereinfachtes Prinzipschaltbild einer Messanordnung mit einer hier betroffenen Sensorauswerteeinheit, gemäß dem Stand der Technik.
- Figur 2: zeigt eine erfindungsgemäß modifizierte Sensorauswerteeinheit, insbesondere zu Zwecken der Illustration des erfindungsgemäßen Verfahrens zum Betrieb einer solchen Sensorauswerteeinheit.

### Beschreibung von Ausführungsbeispielen

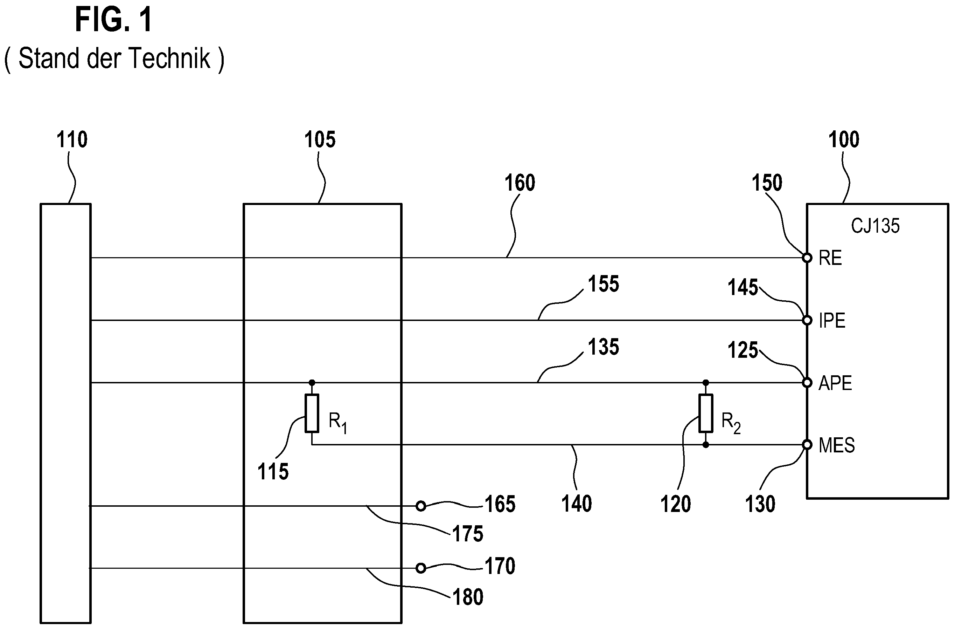

Figur 1 zeigt eine vereinfachte Darstellung einer an sich bekannten, vorliegend aus einem Auswerte-IC 100 vom Typ "CJ135" und einem Sensorstecker 105 sowie aus nachfolgend beschriebenen Leitungen gebildeten Sensorauswerteeinheit bzw. Sensorauswerteschaltung zur Auswertung eines mit dem Sensorstecker 105 verbindbaren Sensors bzw. Sonde 110, und zwar am Beispiel einer Lambdasonde. Die Sonde 110 wird, wie an sich bekannt, mittels eines Trimmwiderstandes (R1) 115 abgeglichen und mittels des Auswerte-IC 100 vor der Durchführung einer Lambda-Bestimmung so genau wie möglich ausgemessen. Hierzu wird ein gezeigter Messwiderstand (R2) 120 verwendet, der zwischen einem äußeren Pumpelektrodenanschluss (APE) 125 und einem Messanschluss (MES) 130 bzw. zwischen entsprechenden Sensorleitungen 135 und 140 angeordnet ist.

Der Messwiderstand (R2) 120 erweitert aufgrund der Parallelschaltung von R1 115 und R2 120 den Messbereich der Widerstandsmessung für große Trimmwiderstandswerte, da in dieser Schaltungsanordnung nach dem ohmschen Gesetz der Gesamtwiderstand geringer ist als die Summe der Einzelwiderstände, womit bei vorgegebenem Messstrom auch die an dem Gesamtwiderstand abfallende Spannung geringer ist. Der somit geringere Spannungsbereich liegt dann innerhalb des maximalen Aussteuerbereichs einer Messeinheit, insbesondere liegt die abfallende Spannung bei 3,5 V.

Der gezeigte Auswerte-IC 100 weist zusätzlich einen inneren Pumpelektrodenanschluss (IPE) 145 und einen Referenzelektrodenanschluss (RE) 150 auf, welche mit dem Sensor 110 über zwei Leitungen 155 und 160 verbunden sind. Zum Betrieb des Sensors 110 ist in dem vorliegenden Beispiel einer Lambdasonde zusätzlich eine Heizung der Sonde 110 erforderlich, welche mittels über Leitungen 175 und 180 mit der Lambdasonde 110 verbundene Heizelemente 165, 170 erfolgt.

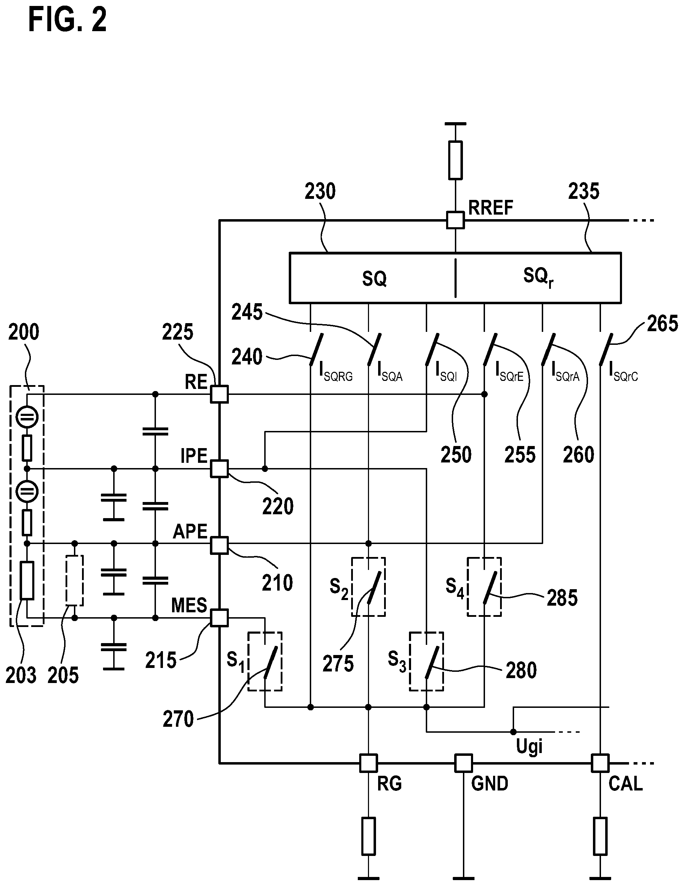

Der Widerstandswert des Trimmwiderstandes (R1) 115 wird in an sich bekannter Weise mittels des über den in Figur 2 gezeigten Schalter I_{SQA} 245 fließenden Pumpstroms SQ ermittelt, wobei die Höhe des Pumpstroms in einem Bereich zwischen 5 mA und 18 mA einstellbar ist. Während der Widerstandsmessung fließt der Pumpstrom über die Parallelschaltung der beiden Widerstände R1 115 und R2 120, ausgehend vom IC-Pin (Pumpelektrodenanschluss APE) 125 zum Messanschluss (MES) 130 hin in den Auswerte-IC 100 zurück. Durch eine Spannungsmessung zwischen den beiden IC-Pins (APE 125 und MES 130) wird der aus den Einzelwerten von R1 115 und R2 120 gebildete Gesamtwiderstand ermittelt und daraus mittels des ohmschen Gesetzes der Widerstandswert des Trimmwiderstandes (R1) 115 berechnet.

Die in Figur 2 erfindungsgemäße Sensorauswerteeinheit dient zum Betrieb eines durch die gestrichelte Linie 200 angedeuteten Sensors mittels eines genannten Abgleich- bzw. Trimmwiderstandes 203. Zusätzlich eingezeichnet ist ein beschriebener Messwiderstand 205, der allerdings vorliegend, wie durch die gestrichelte Liniengebung angedeutet, nicht erforderlich ist.

Der Sensor 200 ist wie in Figur 1 über genannte Anschlüsse APE 210, MES 215, IPE 220 und RE 225 mit der rechts dargestellten Auswerteeinheit verbindbar. Die Auswerteeinheit umfasst eine genannte Stromquelle SQ 230 sowie eine genannte Referenzstromquelle SQr 235. Die beiden Stromquellen SQ 230 und SQr 235 sind über verschiedene Stromschalter I_{SQRG} 240, I_{SQA} 245, I_{SQI} 250, I_{SQrE} 255, I_{SQrA} 260 und I_{SQrC} 265 mit einer hier dargestellten Leitungs- bzw. Schaltungsanordnung verbunden. Die Schaltungsanordnung umfasst ferner vier Schalter S₁ 270, S₂ 275, S₃ 280 und S₄ 285.

Die in Figur 2 gezeigte Sensorauswerteeinheit arbeitet, in Abhängigkeit von den jeweiligen Schalterstellungen der genannten Schalter 240 - 265 und 270 - 285 und mit der genannten, erfindungsgemäß modifizierten Ablaufsteuerung, wie folgt. Die Modifikation der Ablaufsteuerung kann vorteilhaft durch kostengünstige Umprogrammierung der Sensorauswerteeinheit erfolgen, wodurch insbesondere ein technisch aufwändiger und daher kostspieliger Eingriff in die Schaltungsanordnung vermieden wird.

In einer Schalterstellung, in der sämtliche Schalter (insbesondere der Schalter S₂ 275) offen sind und lediglich die Schalter I_{SQRG} 240 und I_{SQA} 245 geschlossen sind, wird der Trimmwiderstand 203 mit einem gegenüber dem Stand der Technik geringeren Messstrom beaufschlagt. Ähnlich wie in Figur 1 wird der Widerstandswert des Trimmwiderstandes (R1) 115 mittels des über den Schalter I_{SQA} 245 fließenden Pumpstroms SQ ermittelt, wobei die Höhe des Pumpstroms in einem Bereich zwischen 0,4 mA bis 18 mA einstellbar ist. Während der Widerstandsmessung fließt der Pumpstrom lediglich über den Trimmwiderstand 203, und zwar entsprechend Figur 1 ausgehend vom IC-Pin (Pumpelektrodenanschluss APE) 210 zum Messanschluss (MES) 215 hin in die Auswerteeinheit zurück. Durch eine Spannungsmessung zwischen den beiden IC-Pins (APE 210 und MES 215) wird hier der Widerstandswert des Trimmwiderstandes 203 ermittelt.

In einer alternativen Ausgestaltung wird der erfindungsgemäß geringere Messstrom für die Widerstandsmessung mittels der Referenzstromquelle SQr 235 erzeugt, welche bereits einen präzisen Strom zwischen 0,4 mA und 1,1 mA liefert. Die entsprechende Modifikation der Ablaufsteuerung erfolgt hierbei durch Schließen der Schalter I_{SQrA} 260, I_{SQrC} 265 und S₁ 270, wobei die übrigen Schalter I_{SQRG} 240 - I_{SQrE} 255 sowie S₂ 275 - S₄ 285 bevorzugt geöffnet sind.

Es ist anzumerken, dass die Referenzelektrode (RE) 225 nur über die Referenzstromquelle SQr 235 mit Strom versorgt wird, und zwar durch Schließen des genannten Schalters I_{SQrE} 255.

Die in Figur 2 gezeigte Sensorauswerteeinheit bzw. Mess-/Schaltungsanordnung kommt demnach ohne den genannten Messwiderstand R2 120 aus und ermöglicht zudem die Erkennung von sogenannten "Open Load"-Zuständen, welche z.B. durch Leitungsbrüche oder anders bedingte Leitungsverbindungsfehler an dem genannten MES-Anschluss 215 und dem APE-Anschluss 210 verursacht werden. Bisher müssen für die Diagnose solcher Verbindungsfehler an den genannten beiden Leitungen jeweils mehrere Messungen durchgeführt werden, da durch den Messwiderstand stets eine leitfähige Verbindung zwischen den MES- und APE-Anschlüssen 210, 215 besteht. Daher müssen mehrere Kriterien für die sichere Bestimmung eines solchen Verbindungsfehlers herangezogen werden, was den Aufwand für die Implementierung mittels eines Steuerprogramms oder einer Steuerschaltung deutlich erhöht und das Steuerprogramm oder die Steuerschaltung fehleranfälliger macht.

Das beschriebene Verfahren kann entweder in Form eines Steuerprogramms in einem bestehenden Steuergerät zur Steuerung einer Brennkraftmaschine realisiert werden oder in Form einer entsprechenden Steuereinheit.

## Patentansprüche

1. Verfahren zum Betrieb einer Sensorauswerteeinheit zur Auswertung von von einem Sensor (200) gelieferten Messsignalen, insbesondere von von einer Lambdasonde einer Brennkraftmaschine gelieferten Messsignalen, wobei die Sensorauswerteeinheit wenigstens eine erste Messstromquelle (230, 235) und einen elektrischen Abgleichwiderstand (203) zum Abgleich von die Messsignale beeinflussenden Fertigungstoleranzen des Sensors (200) aufweist, wobei der Abgleichwiderstand (203) mit einem Messstrom (245) beaufschlagt wird, mittels dessen die an dem Abgleichwiderstand (203) abfallende elektrische Spannung (210, 215) auf einen Maximalwert begrenzt wird, **dadurch gekennzeichnet, dass** die Sensorauswerteeinheit keinen Messwiderstand aufweist.

2. Verfahren nach Anspruch 1, **dadurch gekennzeichnet, dass** der Maximalwert der an dem Abgleichwiderstand (203) abfallenden elektrischen Spannung innerhalb des maximalen Aussteuerbereichs einer Messeinheit liegt.

3. Verfahren nach Anspruch 1 oder 2, **dadurch gekennzeichnet, dass** der Stellbereich der ersten Messstromquelle (230) zu Stromwerten von 0,4 mA bis 18 mA hin erweitert wird.

4. Verfahren nach Anspruch 1 oder 2, **dadurch gekennzeichnet, dass** der Messstrom (245) mittels einer zweiten Messstromquelle (235), welche einen Strom im Bereich von 0,4 mA bis 1,1 mA liefert, erzeugt wird.

5. Verfahren nach einem der vorhergehenden Ansprüche, **dadurch gekennzeichnet, dass** der Messstrom (245) durch Eingriff in eine Ablaufsteuerung der Sensorauswerteeinheit bereitgestellt wird.

6. Verfahren nach Anspruch 5, **dadurch gekennzeichnet, dass** der Eingriff in die Ablaufsteuerung der Sensorauswerteeinheit durch geeignete Ansteuerung von Schaltern (240 - 265, 270 - 285) erfolgt.

7. Sensorauswerteeinheit zur Auswertung von von einem Sensor (200) gelieferten Messsignalen, insbesondere von von einer Lambdasonde einer Brennkraftmaschine gelieferten Messsignalen, wobei die Sensorauswerteeinheit wenigstens eine erste Messstromquelle (230, 235), einen elektrischen Abgleichwiderstand (203) zum Abgleich von die Messsignale beeinflussenden Fertigungstoleranzen des Sensors (200) und eine Ablaufsteuerung aufweist, mittels der der Abgleichwiderstand (203) mit einem Messstrom (245) beaufschlagt wird, durch den die an dem Abgleichwiderstand (203) abfallende elektrische Spannung (210, 215) auf einen Maximalwert begrenzt ist, **dadurch gekennzeichnet, dass** die Sensorauswerteeinheit keinen Messwiderstand aufweist.

8. Sensorauswerteeinheit nach Anspruch 7, **dadurch gekennzeichnet, dass** die Ablaufsteuerung durch eine Schalteranordnung (240 - 265, 270 - 285) gebildet ist.

9. Sensorauswerteeinheit nach einem der Ansprüche 7 bis 8, **dadurch gekennzeichnet, dass** der Maximalwert der an dem Abgleichwiderstand (203) abfallenden elektrischen Spannung innerhalb des maximalen Aussteuerbereichs einer Messeinheit liegt.

10. Sensorauswerteeinheit nach einem der Ansprüche 7 bis 9, **dadurch gekennzeichnet, dass** der Stellbereich der ersten Messstromquelle (230) zu Stromwerten von 0,4 mA bis 18 mA hin erweitert ist.

11. Computerprogramm, das alle Schritte eines Verfahrens gemäß einem der Ansprüche 1 bis 6 ausführt, wenn es auf einem Rechengerät oder einem Steuergerät (100) ausgeführt wird.

12. Computerprogrammprodukt mit Programmcode, der auf einem maschinenlesbaren Träger gespeichert ist, zur Durchführung eines Verfahrens gemäß einem der Ansprüche 1 bis 6, wenn das Programm auf einem Rechengerät oder einem Steuergerät (100) ausgeführt wird.

## Claims

1. Method for operating a sensor evaluation unit for the evaluation of measuring signals delivered by a sensor (200), in particular of measuring signals delivered by a lambda probe of an internal combustion engine, wherein the sensor evaluation unit comprises at least one first measuring current source (230, 235) and an electrical balancing resistor (203) for balancing manufacturing tolerances of the sensor (200) that influence the measuring signals, wherein the balancing resistor (203) is supplied with a measuring current (245) by means of which the electrical voltage (210, 215) dropping across the balancing resistor (203) is limited to a maximum value, **characterized in that** the sensor evaluation unit does not have a measuring resistor.

2. Method according to Claim 1, **characterized in that** the maximum value of the electrical voltage dropping across the balancing resistor (203) lies within the maximum control range of a measuring unit.

3. Method according to Claim 1 or 2, **characterized in that** the adjusting range of the first measuring current source (230) is extended to current values of 0.4 mA to 18 mA.

4. Method according to Claim 1 or 2, **characterized in that** the measuring current (245) is generated by means of a second measuring current source (235), which delivers a current in the range of 0.4 mA to 1.1 mA.

5. Method according to one of the preceding claims, **characterized in that** the measuring current (245) is provided by intervention in a sequence control of the sensor evaluation unit.

6. Method according to Claim 5, **characterized in that** the intervention in the sequence control of the sensor evaluation unit takes place by suitable activation of switches (240-265, 270-285).

7. Sensor evaluation unit for the evaluation of measuring signals delivered by a sensor (200), in particular of measuring signals delivered by a lambda probe of an internal combustion engine, wherein the sensor evaluation unit comprises at least one first measuring current source (230, 235), an electrical balancing resistor (203) for balancing manufacturing tolerances of the sensor (200) that influence the measuring signals and a sequence control, by means of which the balancing resistor (203) is supplied with a measuring current (245) by which the electrical voltage (210, 215) dropping across the balancing resistor (203) is limited to a maximum value, **characterized in that** the sensor evaluation unit does not have a measuring resistor.

8. Sensor evaluation unit according to Claim 7, **characterized in that** the sequence control is formed by a switch arrangement (240-265, 270-285).

9. Sensor evaluation unit according to either of Claims 7 and 8, **characterized in that** the maximum value of the electrical voltage dropping across the balancing resistor (203) lies within the maximum control range of a measuring unit.

10. Sensor evaluation unit according to one of Claims 7 to 9, **characterized in that** the adjusting range of the first measuring current source (230) is extended to current values of 0.4 mA to 18 mA.

11. Computer program which carries out all the steps of a method according to one of Claims 1 to 6 when it is executed on a computing device or a control device (100) .

12. Computer program product with program code which is stored on a machine-readable carrier, for carrying out a method according to one of Claims 1 to 6 when the program is executed on a computing device or a control device (100).

## Revendications

1. Procédé permettant de faire fonctionner une unité d'évaluation de capteur pour évaluer des signaux de mesure fournis par un capteur (200), en particulier des signaux de mesure fournis par une sonde lambda d'un moteur à combustion interne, l'unité d'évaluation de capteur présentant au moins une première source de courant de mesure (230, 235) et une résistance d'équilibrage électrique (203) pour équilibrer des tolérances de fabrication du capteur (200) influençant les signaux de mesure, la résistance d'équilibrage (203) étant soumise à un courant de mesure (245) au moyen duquel la tension électrique (210, 215) diminuant au niveau de la résistance d'équilibrage (203) est limitée à une valeur maximale,
**caractérisé en ce que** l'unité d'évaluation de capteur ne présente pas de résistance de mesure.

2. Procédé selon la revendication 1, **caractérisé en ce que** la valeur maximale de la tension électrique diminuant au niveau de la résistance d'équilibrage (203) est comprise dans la plage dynamique maximale d'une unité de mesure.

3. Procédé selon la revendication 1 ou 2, **caractérisé en ce que** la plage de réglage de la première source de courant de mesure (230) est étendue en direction des valeurs de courant de 0,4 mA à 18 mA.

4. Procédé selon la revendication 1 ou 2, **caractérisé en ce que** le courant de mesure (245) est généré au moyen d'une deuxième source de courant de mesure (235) qui fournit un courant dans la plage de 0,4 mA à 1,1 mA.

5. Procédé selon l'une quelconque des revendications précédentes, **caractérisé en ce que** le courant de mesure (245) est fourni par une intervention sur une commande séquentielle de l'unité d'évaluation de capteur.

6. Procédé selon la revendication 5, **caractérisé en ce que** l'intervention sur la commande séquentielle de l'unité d'évaluation de capteur est effectuée par un pilotage approprié de commutateurs (240 à 265, 270 à 285) .

7. Unité d'évaluation de capteur permettant d'évaluer des signaux de mesure fournis par un capteur (200), en particulier de signaux de mesure fournis par une sonde lambda d'un moteur à combustion interne, l'unité d'évaluation de capteur présentant au moins une première source de courant de mesure (230, 235), une résistance d'équilibrage électrique (203) pour équilibrer des tolérances de fabrication du capteur (200) influençant les signaux de mesure, et une commande séquentielle au moyen de laquelle la résistance d'équilibrage (203) est soumise à un courant de mesure (245) par lequel la tension électrique (210, 215) diminuant au niveau de la résistance d'équilibrage (203) est limitée à une valeur maximale,
**caractérisée en ce que** l'unité d'évaluation de capteur ne présente pas de résistance de mesure.

8. Unité d'évaluation de capteur selon la revendication 7, **caractérisée en ce que** la commande séquentielle est formée par un agencement de commutateurs (240 à 265, 270 à 285).

9. Unité d'évaluation de capteur selon l'une quelconque des revendications 7 à 8, **caractérisée en ce que** la valeur maximale de la tension électrique diminuant au niveau de la résistance d'équilibrage (203) est comprise dans la plage dynamique maximale d'une unité de mesure.

10. Unité d'évaluation de capteur selon l'une quelconque des revendications 7 à 9, **caractérisée en ce que** la plage de réglage de la première source de courant de mesure (230) est étendue en direction des valeurs de courant de 0,4 mA à 18 mA.

11. Programme informatique qui exécute toutes les étapes d'un procédé selon l'une quelconque des revendications 1 à 6 lorsqu'il est exécuté sur un appareil de calcul ou un appareil de commande (100).

12. Produit programme informatique comprenant du code programme qui est stocké sur un support lisible par machine pour exécuter un procédé selon l'une quelconque des revendications 1 à 6 lorsque le programme est exécuté sur un appareil de calcul ou un appareil de commande (100).
